# FASCICULE DE BREVET EUROPEEN

(11) **EP 3 945 651 B1**
(45) Date de publication et mention de la délivrance du brevet: **25.06.2025**
(21) Numéro de dépôt: 21187828.5
(22) Date de dépôt: 27.07.2021
(51) Int. Cl.: H02H 7/122, H02M 7/00, H02M 7/32

(54) **DISPOSITIF DE PROTECTION D'UN CONVERTISSEUR DE PUISSANCE, DISPOSITIF DE CONVERSION DE PUISSANCE**
SCHUTZVORRICHTUNG EINES LEISTUNGSWANDLERS UND LEISTUNGSWANDLERVORRICHTUNG
DEVICE FOR PROTECTING A POWER CONVERTER, POWER CONVERSION DEVICE

(30) Priorité: 29.07.2020 FR 2008023
(43) Date de publication de la demande: 02.02.2022
(73) Titulaire: Safran Electrical & Power, 31700 Blagnac (FR)
(72) Inventeur: KHERBOUCHI, Hocine, 78400 CHATOU (FR); DUBOIS, Eric Ravindranath, 78400 CHATOU (FR); GUGUEN, Stéphane, 78400 CHATOU (FR); SADEG, Bruno, 78400 CHATOU (FR)
(74) Mandataire: Atout PI Laplace

(56) Documents cités:
- US-A1- 2016 020 684
- US-A1- 2017 338 733
- US-B1- 6 351 359

## Description

L'invention se situe dans le domaine de l'électronique de puissance et, plus particulièrement, dans le domaine de la protection d'un convertisseur de puissance configuré pour délivrer un courant alternatif, par exemple, d'un onduleur de puissance, en cas d'un court-circuit entraînant une hausse du courant circulant dans les interrupteurs de puissance du convertisseur de puissance.

L'invention s'applique notamment à la protection des convertisseurs de puissance utilisés dans l'aéronautique pour délivrer une tension alternative destinée à alimenter un réseau de bord d'un aéronef.

Le courant délivré par un onduleur de puissance est classiquement régulé par une boucle de régulation dans laquelle le courant efficace circulant en sortie d'un filtre de sortie de l'onduleur est mesuré et comparé à une valeur seuil prédéterminée. Lorsque le courant efficace circulant en sortie du filtre de sortie de l'onduleur dépasse la valeur seuil, le courant de sortie est régulé en agissant sur le rapport cyclique des interrupteurs de puissance pour qu'il revienne à une valeur inférieure ou égale à la valeur seuil.

Or, le temps de réaction d'une telle solution est relativement important, ce qui n'empêche pas le courant efficace de sortie d'augmenter jusqu'à atteindre un seuil de disjonction relativement élevé qui entraîne le déclenchement d'un disjoncteur rendant l'onduleur indisponible. Cette solution n'empêche pas, non plus, de grandes variations de courant. Cette solution présente ainsi l'inconvénient d'obliger à dimensionner les interrupteurs de puissance et les composants de puissance du filtre de sortie de l'interrupteur pour qu'ils puissent supporter un courant maximal élevé et de grandes variations de courant rendant ces composants relativement volumineux et lourds.

Le document D1 (US 6 351 359 B1) décrit un circuit pour bloquer un dispositif de commutation à semi-conducteur en cas de surintensité, qui comprend un dispositif de surveillance, un capteur de courant et un dispositif de commande. Le circuit réduit la surtension dans le dispositif de commutation lorsque le dispositif de commutation est bloqué en raison d'une surintensité. Le document D2 (US 2016/020684 A1) décrit un dispositif de protection qui comprend un premier onduleur et un deuxième onduleur ; le courant de sortie est limité à une valeur de limiteur lorsque le courant de sortie atteint la valeur du limiteur.

Le but de l'invention est de limiter au moins un des inconvénients précités.

L'invention est exposée dans le jeu de revendications annexé.

D'autres caractéristiques, détails et avantages de l'invention ressortiront à la lecture de la description faite en référence au dessin annexé donné à titre d'exemple et qui représente :

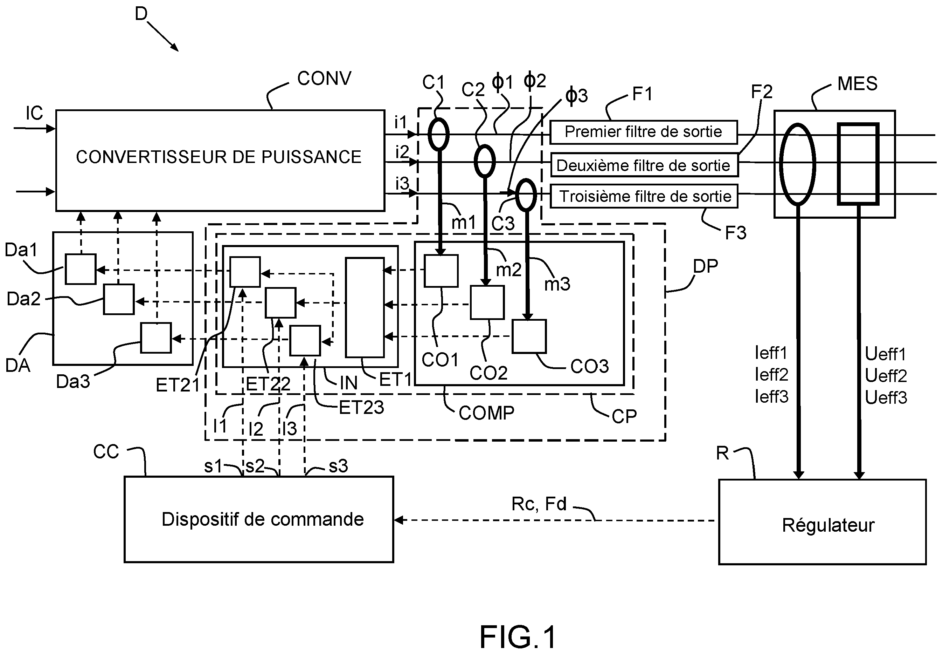

[Fig.1] la figure 1 représente de façon schématique un dispositif de conversion de puissance D comprenant un convertisseur de puissance et un dispositif de protection DP selon l'invention.

Le dispositif de conversion de puissance D comprend un convertisseur de puissance CONV apte à délivrer une tension alternative monophasée ou polyphasée, par exemple triphasée. Ce convertisseur CONV est, par exemple, un onduleur (convertisseur DC/AC) ou un convertisseur alternatif/alternatif (convertisseur AC/ AC).

De façon classique, le convertisseur CONV comprend des interrupteurs de puissance.

Les interrupteurs de puissance sont typiquement des interrupteurs électroniques formés par des transistors de puissance, par exemple des transistors bipolaires à grille isolée ou IGBT ("Insulated Gate Bipolar Transistor"). D'autres types d'interrupteurs de puissance peuvent bien entendu être utilisés, par exemple, des transistors de type MOSFET, COOLMOS, JFET ou des thyristors, par exemple à base de nitrure de gallium (GaN) ou de carbure de silicium (SiC)

Dans l'exemple non limitatif de la figure 1, le convertisseur CONV est un onduleur triphasé délivrant trois phases ϕ1, ϕ2, ϕ3 destinées à alimenter un réseau utilisateur, par exemple un réseau de bord d'un aéronef, au travers d'un ensemble de filtrage comprenant un filtre de sortie F1, F2, F3 par phase ϕ1, ϕ2, ϕ3. Chaque filtre de sortie est destiné à filtrer le signal circulant sur une des phases ϕ1, ϕ2, ϕ3.

Chaque filtre de sortie F1, F2, F3 est un filtre passe-bas. Il présente une fréquence de coupure élevée par rapport à la fréquence de découpage du convertisseur de puissance CONV de sorte que le filtre de sortie coupe la composante haute fréquence du signal de sortie du convertisseur CONV tout en conservant sa composante variable sans influer sur sa valeur moyenne de façon que le réseau utilisateur soit alimenté par une tension alternative triphasée de valeur moyenne nulle ou par un courant alternatif triphasé de valeur moyenne nulle selon que l'onduleur est commandé pour être un onduleur de courant ou de tension.

Autrement dit, chaque filtre de sortie F1, F2 ou F3 est configuré de façon que chaque phase est sinusoïdale en sortie du filtre de sortie F1, F2 ou F3.

Chaque filtre de sortie F1, F2 ou F3 est, par exemple, un filtre RLC.

Le dispositif de conversion de puissance D comprend un régulateur R configuré pour déterminer un rapport cyclique Rc, à une fréquence de découpage prédéterminée Fd, à partir d'un courant cible Ic et de mesures du courant efficace leff1, leff2, leff3 et/ou de la tension efficace Ueff1, Ueff2, Ueff3 en sortie des filtres de sortie F1, F2, F3 délivrées par un dispositif de mesure MES de courant et/ou de mesures de tension.

Le régulateur R est configuré pour déterminer le rapport cyclique Rc tel que chacun des courants efficace leff 1, leff2, leff3 soit égal ou sensiblement égal au courant cible Ic à la fréquence de découpage Fd.

Le dispositif de conversion de puissance D comprend un dispositif de commande CC destiné à commander la commutation des interrupteurs de puissance du convertisseur CONV via un dispositif d'attaque DA pour moduler le courant, par exemple le courant continu, injecté en entrée du convertisseur CONV afin de produire les trois phases alternatives d'une tension triphasée ou d'un courant triphasé, en sortie des filtres de sortie F1, F2, F3, ayant chacune un courant efficace égal ou sensiblement égal au courant cible Ic ou une tension efficace Ueff égale ou sensiblement égale à la tension cible Uc.

On utilise typiquement une modulation de largeur d'impulsions (MLI ou PWM pour "Pulse Width Modulation").

Le dispositif de commande CC délivre des commandes destinées à faire commuter les interrupteurs du convertisseur CONV à la fréquence de découpage Fd avec le rapport cyclique Rc.

Ces commandes sont, par exemple, des impulsions de commutation I1, I2, I3 délivrées à la fréquence de découpage Fd avec un rapport cyclique Rc défini par le régulateur R.

Les impulsions de commutation I1, I2, I3 sont, par exemple, appliquées aux interrupteurs de puissance du convertisseur de puissance CONV via un dispositif d'attaque DA (« driver » en terminologie anglo-saxonne) pour commander des commutations successives de chacun des interrupteurs entre l'état conducteur et l'état bloquant à la fréquence de découpage Fd avec le rapport cyclique Rc.

Selon l'invention, le dispositif de conversion de puissance D comprend un dispositif de protection DP particulier entouré en traits pointillés sur la figure 1.

Le dispositif de protection DP selon l'invention comprend :
- un ensemble d'au moins un capteur comprenant, ici, des capteurs C1, C2, respectivement C3, permettant chacun de délivrer une mesure m1, m2, respectivement m3 représentative du courant instantané circulant en sortie du convertisseur de puissance CONV sur une des phases ϕ1, ϕ2, respectivement ϕ3, entre des interrupteurs de puissance du convertisseur CONV et le filtre de sortie F1, F2, respectivement F3, filtrant la phase considérée ϕ1, ϕ2, respectivement ϕ3,
- un dispositif protecteur CP destiné à recevoir la mesure représentative du courant instantané m1, m2, respectivement m3, délivrée par chaque capteur C1, C2, C3, et à être relié au dispositif de commande CC et au convertisseur de puissance CONV de sorte que les impulsions de commutation I1, I2, I3, ou plus généralement les commandes, délivrées par le dispositif de commande CC soient transmises au convertisseur de puissance CONV via le dispositif protecteur CP, le dispositif protecteur CP étant configuré pour inhiber les impulsions de commutation I1, I2, I3, ou, de façon plus générale, les commandes, lorsque la valeur absolue d'au moins une des mesures prises parmi m1, m2 et m3 dépasse un premier seuil S1 prédéterminé positif de façon que les interrupteurs du convertisseur de puissance CONV soient maintenus à l'état bloquant.

Le dispositif d'attaque DA est configuré de façon à maintenir les interrupteurs de puissance du convertisseur de puissance CONV à l'état bloquant lorsqu'il ne reçoit pas d'impulsions de commutation, ou de commande, en provenance du dispositif de commande CC, c'est-à-dire lorsque la valeur absolue d'au moins une des mesures prises parmi les mesures m1, m2 et m3 dépasse le premier seuil S1, et de façon à appliquer les impulsions de commutation, ou de commande, aux interrupteurs de puissance du convertisseur CONV, lorsque le dispositif d'attaque DA reçoit les impulsions de commutation en provenance du dispositif de commande CC, c'est-à-dire, lorsqu'aucune des valeurs absolues des mesures m1, m2 et m3 ne dépasse le premier seuil S1, de façon à faire commuter chacun des interrupteurs de puissance du convertisseur CONV entre son état conducteur et son état bloquant à la fréquence de découpage Fd avec le rapport cyclique Rc.

Cette solution présente un temps de réaction limité, permet d'éviter une hausse trop importante du courant circulant dans les interrupteurs de puissance suite à une hausse du courant efficace et permet d'éviter des différences de courant trop importantes, ce qui donne la possibilité de limiter le dimensionnement des interrupteurs de puissance et du filtre de sortie. Cette solution permet également de protéger le convertisseur lors d'un court-circuit fugitif ou éphémère. Elle permet, par exemple, de réagir avant une boucle de régulation basée sur le régulateur déterminant, lorsque la mesure d'au moins un des courants efficace de sortie leff1, leff2, leff3 dépasse une valeur de courant de court-circuit prédéterminée, un rapport cyclique particulier défini pour faire diminuer la valeur absolue du courant efficace lorsque le dispositif de commande commande les interrupteurs à partir de ce rapport cyclique particulier.

Cette solution maintient également le courant de court-circuit à un niveau acceptable le temps que le disjoncteur du réseau disjoncte ce qui protège le convertisseur lors d'un court-circuit permanent.

Chacun des capteurs C1, C2, C3 comprend avantageusement un capteur à effet Hall. La mesure en sortie du capteur est une tension instantanée image du courant instantané ou une mesure du courant instantané. Le premier seuil S1 et chaque seuil évoqué dans la suite de la demande de brevet est alors un seuil positif de tension ou en courant.

Chaque capteur peut comprendre un filtre et/ou un amplificateur permettant de filtrer et/ou d'amplifier la mesure issue du capteur à effet Hall.

Dans la réalisation non limitative des figures, le dispositif protecteur CP comprend :
- un dispositif comparateur COMP configuré pour comparer la valeur absolue de la mesure m1, m2, m3, représentative du courant instantané de sortie i1, i2, i3, délivrée par chacun des capteurs C1, C2, C3 au premier seuil S1,
- un inhibiteur IN relié au convertisseur CONV et au dispositif de commande CC de sorte que les impulsions de commutation ou commandes délivrées par le dispositif de commande CC sont transmises au convertisseur de puissance CONV via l'inhibiteur IN, l'inhibiteur IN étant configuré pour inhiber, c'est-à-dire masquer, les impulsions de commutation, ou commandes, provenant du dispositif de commande CC, lorsque la valeur absolue d'au moins une des mesures prises parmi m1, m2 et m3 est supérieure au premier seuil S1, de façon à maintenir les interrupteurs de puissance du convertisseur de puissance CONV à l'état bloquant.

Le dispositif comparateur COMP comprend, par exemple, trois comparateurs CO1, CO2, CO3. Chaque comparateur CO1, CO2 et respectivement CO3, est configuré pour comparer la valeur absolue de la mesure m1, m2, et respectivement m3, représentative d'un des courants instantanés de sortie, au premier seuil S1. Chaque comparateur CO1, CO2, et respectivement CO3, est configuré pour délivrer un signal de sortie égal à 0 lorsque la valeur absolue de la mesure considérée m1, m2, et respectivement m3, est supérieure au premier seuil S1 et égale à 1 lorsque la mesure considérée m1, m2, et respectivement m3, est inférieure ou égale au premier seuil S1.

L'inhibiteur IN comprend, par exemple, un premier circuit logique ET1 à trois entrées en ET recevant les sorties des trois comparateurs CO1, CO2, CO3 et configuré pour délivrer une sortie égale à 1 lorsque les trois sorties des comparateurs sont égales à 1 et une sortie égale à 0 lorsque la sortie d'au moins un des comparateurs est égale à 0.

Ainsi les commandes ou impulsions I1, I2, I3 délivrées par le dispositif de commande CC sont transmises au dispositif d'attaque DA uniquement lorsque les valeurs absolues de chacune des mesures m1, m2 et m3 est inférieure ou égale au premier seuil S1.

Dans l'exemple non limitatif des figures, le dispositif de commande CC délivre trois jeux d'impulsions de commutation I1, I2, I3. Chaque jeu d'impulsions de commutation I1, I2, I3 est destiné à commander un sous-ensemble d'interrupteurs de puissance destiné à générer une des phases ϕ1, ϕ2, ϕ3 de sortie du convertisseur CONV. A cet effet, le dispositif de commande CC comprend trois sorties s1, s2, s3. Le dispositif de commande CC délivre à chacune de ces sorties s1, s2, s3 un des trois jeux d'impulsions de commutation I1, I2, I3. L'inhibiteur IN comprend alors trois deuxièmes circuits logiques en ET : ET21, ET22, ET23. La première entrée de chacun des deuxièmes circuits logiques ET21, ET22, ET23 reçoit la sortie du premier circuit logique ET1. La deuxième entrée de chacun des deuxièmes circuits logiques ET21, ET22, ET23 est reliée à une des sorties s1, s2, s3 du dispositif de commande CC de sorte à recevoir un des jeux d'impulsions de commutation I1, I2, I3.

La sortie de chacun des deuxièmes circuits logiques ET21, ET22, et respectivement ET23 est ainsi égale à 0 lorsque la valeur absolue d'au moins une des mesures prises parmi m1, m2 et m3 est supérieure au premier seuil S1. La sortie de chacun des deuxièmes circuits logiques ET21, ET22, et respectivement ET23 est ainsi égale aux impulsions de commutation I1, I2, et respectivement I3, ou plus généralement aux commandes générées par le dispositif de commande CC et transmises via ladite sortie s1, s2, respectivement s3, reliée au deuxième circuit logique considéré, lorsque les valeurs absolues des trois mesures m1, m2 et m3 sont inférieures ou égales au premier seuil S1.

Le dispositif d'attaque DA comprend, par exemple, trois dispositifs d'attaque individuels Da1, Da2, Da3. Chaque dispositif d'attaque individuel Da1, Da2, et respectivement Da3, est relié à la sortie d'un des deuxièmes circuits logiques ET21, ET22, et respectivement ET23, de sorte à transmettre le jeu d'impulsions de commutation I1, I2, et respectivement I3, reçu en entrée du dispositif d'attaque individuel Da1, Da2, et respectivement Da3, aux interrupteurs de puissance du convertisseur CONV qui permettent de régler la phase correspondante ϕ1, ϕ2, et respectivement ϕ3.

Avantageusement, le dispositif de protection DP est configuré pour maintenir les interrupteurs de puissance du convertisseur CONV à l'état bloquant tant que la valeur absolue d'au moins une des mesures prises parmi m1, m2 et m3 est supérieure à un deuxième seuil S2 inférieur au premier seuil S1.

A cet effet, chacun des comparateurs CO1, CO2, respectivement CO3, est, par exemple, un comparateur à deux seuils, dont le premier seuil S1 et le deuxième seuil S2, et est configuré pour que sa sortie soit égale à 0, lorsque la valeur absolue de la mesure m1, m2, respectivement m3, est supérieure au premier seuil S1, et reste égale à 0 tant que la valeur absolue de la mesure m1, m2, respectivement m3 qu'il reçoit, est supérieure au deuxième seuil S2. Chacun des comparateurs CO1, CO2, respectivement CO3 est également configuré pour sa sortie soit égale à 1, une fois que la mesure m1, m2, respectivement m3, injectée en entrée du comparateur redevient inférieure ou égale au deuxième seuil S2 et reste égale à 1 tant que la mesure m1, m2, respectivement m3, est inférieure ou égale au premier seuil S1.

Les différents seuils assurent ainsi la stabilité du contrôle et de la puissance lors du court-circuit, les interrupteurs restant à l'état bloquant tant que le courant est situé entre le premier seuil S1 et le deuxième seuil S2.

Avantageusement, le régulateur R est configuré :
- pour fixer la fréquence de découpage Fd à une fréquence de découpage de référence Fref prédéterminée lorsque la valeur absolue de chaque mesure m1, m2 et m3 est inférieure ou égale à un troisième seuil S3 inférieur au premier seuil S1 et au deuxième seuil S2 et pour fixer la fréquence de découpage Fd à une fréquence de découpage de protection Fpro lorsque la valeur absolue d'au moins une des mesures prises parmi m1, m2 et m3 est supérieure au troisième seuil S3,
- et/ou pour déterminer le rapport cyclique Rc à partir d'une valeur du courant cible Ic égale à un courant de référence Iref prédéterminé lorsque la valeur absolue de chacune des mesures m1, m2 et m3, est inférieure ou égale à un troisième seuil S3 inférieur au premier seuil S1 et au deuxième seuil S2, et pour déterminer la rapport cyclique RC à partir d'une valeur du courant cible Ic égale à un courant de protection Ipro inférieur au courant de référence Iref ,lorsque la valeur absolue d'au moins une des mesures prises parmi m1, m2 et m3 est supérieure au troisième seuil S3.

Avantageusement, le rapport cyclique est déterminé à partir de la fréquence de découpage Fd fixée et à partir du rapport cyclique fixé.

Le dispositif de commande CC utilise le rapport cyclique Rc et la valeur de la fréquence de découpage Fd pour générer les commandes ou impulsions de commutation.

La modification de la fréquence de découpage permet de protéger les interrupteurs de puissance de l'usure en limitant les pertes dissipées par les interrupteurs de puissance, et donc l'échauffement de ces interrupteurs de puissance, du fait de la diminution de la fréquence de commutation des convertisseurs lorsque le troisième seuil S3, à partir duquel on considère qu'un court-circuit débute, est dépassé.

La modification du courant cible Ic permet de rapprocher le courant instantané, qui a tendance à se déformer en cas de court-circuit, d'une sinusoïde ce qui permet d'éliminer des harmoniques et donc de dimensionner les interrupteurs de puissance de façon moindre ce qui est bénéfique pour la masse et le volume de ces interrupteurs.

En sus, le régulateur peut être configuré, mais ce n'est pas obligatoire, pour comparer les mesures du courant efficace à un courant efficace seuil et pour déterminer, lorsque la mesure d'au moins un des courants efficaces dépasse un courant de court-circuit prédéterminé, un rapport cyclique particulier, tel que le courant efficace diminue lorsque le dispositif de commande commande les interrupteurs à partir de ce rapport cyclique particulier.

Dans la réalisation avantageuse de la figure, chaque capteur est destiné à délivrer une mesure m1, m2, respectivement m3, représentative du courant instantané circulant en sortie du convertisseur de puissance CONV sur une des phases ϕ1, ϕ2, respectivement ϕ3, entre des interrupteurs de puissance du convertisseur CONV et le filtre de sortie F1, F2, respectivement F3, filtrant la phase considérée ϕ1, ϕ2, respectivement ϕ3. Autrement dit, chaque capteur mesure une grandeur représentative du courant instantané en entrée du filtre de sortie associé.

En variante, chaque capteur mesure une grandeur représentative du courant instantané en sortie du filtre de sortie associé ou, par exemple, entre une inductance et un condensateur du filtre de sortie lorsque ce dernier est un filtre LC ou RLC.

Dans l'exemple de la figure, le dispositif de protection DP est déporté par rapport au dispositif d'attaque DA et est destiné à être interposé entre le dispositif d'attaque DA et le dispositif de commande CC. En variante, le dispositif de protection DP est intégré au dispositif d'attaque DA.

L'invention a été décrite dans le cas d'un onduleur délivrant une tension alternative triphasée mais elle s'applique à tout convertisseur de puissance délivrant une tension alternative monophasée ou polyphasée.

L'homme du métier saura adapter l'invention dans ces autres cas en modifiant notamment le nombre de comparateurs et le nombre de dispositifs d'attaques, chacun de ces nombres devant être égal au nombre de phases délivrées par le convertisseur de puissance.

Le dispositif de commande est, par exemple, un microcontrôleur. Chaque dispositif, pris parmi le régulateur, le dispositif de commande, le dispositif d'attaque et l'inhibiteur peut comprendre un ou plusieurs circuits électroniques dédiés ou un circuit à usage général. Chaque circuit électronique peut comprendre une machine de calcul reprogrammable (un processeur ou un microcontrôleur par exemple) et/ ou un calculateur exécutant un programme comprenant une séquence d'instructions et/ou une machine de calcul dédiée (par exemple un ensemble de portes logiques comme un FPGA, un DSP ou un ASIC, ou tout autre module matériel).

## Revendications

1. Dispositif de conversion de puissance (D) comprenant un convertisseur de puissance (CONV) comprenant des interrupteurs de puissance et destiné à délivré un ensemble d'au moins une phase alternative, un dispositif de commande (CC) destiné à générer des commandes destinées à faire commuter les interrupteurs de puissance entre un état bloquant et un état conducteur, et un dispositif de protection comprenant :
- un ensemble d'au moins un capteur (C1, C2, C3), chaque capteur de l'ensemble d'au moins un capteur permettant de délivrer une mesure (m1, m2, m3) représentative du courant instantané délivré en sortie du convertisseur de puissance (CONV) sur une phase de l'ensemble d'au moins une phase,
- un dispositif protecteur (CP) relié au dispositif de commande (CC) et au convertisseur de puissance (CONV) de sorte que les commandes générées par le dispositif de commande (CC) soient transmises au convertisseur de puissance (DC) via le dispositif protecteur (CP), le dispositif protecteur recevant la mesure représentative du courant instantané délivré par l'ensemble d'au moins un capteur, le dispositif protecteur (CP) étant configuré pour inhiber les commandes délivrées par le dispositif de commande (CC) lorsque la valeur absolue de la mesure représentative du courant instantané délivrée par au moins un capteur de l'ensemble d'au moins un capteur dépasse un premier seuil (S1) prédéterminé de façon que les interrupteurs de puissance du convertisseur de puissance (CONV) soient maintenus à l'état bloquant,
**caractérisé en ce que** le dispositif de conversion de puissance comprenant un régulateur configuré pour déterminer un rapport cyclique pour une fréquence de découpage prédéterminée et un courant cible prédéterminé, le dispositif de commande étant configuré pour générer les commandes destinées à faire commuter les interrupteurs de puissance à la fréquence de découpage avec le rapport cyclique, le régulateur recevant la mesure délivrée par chaque capteur de l'ensemble d'au moins un capteur et étant en outre configuré pour :
- déterminer le rapport cyclique à partir d'une valeur du courant cible à un courant de référence prédéterminé, lorsque la valeur absolue de la mesure représentative du courant instantané de sortie délivrée par chaque capteur de l'ensemble d'au moins un capteur est inférieure ou égale à un troisième seuil inférieur au premier seuil et au deuxième seuil, et pour déterminer le rapport cyclique à partir d'une valeur du courant cible égale à un courant de protection inférieur au courant de référence, lorsque la valeur absolue de la mesure représentative du courant instantané de sortie délivrée par au moins un capteur de l'ensemble d'au moins un capteur est supérieure au troisième seuil,
- et/ou fixer la valeur de la fréquence de découpage à une fréquence de découpage de référence prédéterminée, lorsque la valeur absolue de la mesure représentative du courant instantané de sortie délivrée par chaque capteur de l'ensemble d'au moins un capteur est inférieure ou égale à un troisième seuil inférieur au premier seuil et au deuxième seuil, et fixer la fréquence de découpage à une fréquence de découpage de protection, lorsque la valeur absolue de la mesure représentative du courant instantané de sortie délivrée par au moins un capteur de l'ensemble d'au moins un capteur est supérieure au troisième seuil.

2. Dispositif de conversion de puissance selon la revendication précédente, dans lequel le dispositif protecteur (CP) comprend :
- un ensemble d'au moins un comparateur (CO1, CO2, CO3), chaque comparateur étant configuré pour comparer la valeur absolue de la mesure représentative du courant instantané délivrée par chaque capteur (C1, C2, C3) de l'ensemble d'au moins un capteur à un premier seuil (S1),
- un inhibiteur (IN) relié à la sortie de chaque comparateur (CO1, CO2, CO3) de l'ensemble d'au moins un comparateur et étant destiné à être relié au dispositif de commande (CC) et au convertisseur de puissance (CONV) de sorte que les commandes délivrées par le dispositif de commande (CC) sont transmises au convertisseur de puissance (CONV) via l'inhibiteur (IN), l'inhibiteur (IN) étant configuré pour inhiber les commandes délivrées par le dispositif de commande lorsque la valeur absolue de la mesure représentative du courant instantané délivrée par au moins un capteur de l'ensemble d'au moins un capteur est supérieure au premier seuil (S1).

3. Dispositif de conversion de puissance selon l'une quelconque des revendications précédentes, dans lequel le dispositif protecteur (CP) est configuré pour inhiber les commandes générées par le dispositif de commande tant que la valeur absolue de la mesure représentative d'un des courants instantanés est supérieure à un deuxième seuil (S2) inférieur au premier seuil (S1).

4. Dispositif de conversion de puissance selon l'une quelconque des revendications précédente, dans lequel l'ensemble d'au moins un capteur comprend un capteur à effet **Hall.**

5. Dispositif de conversion de puissance selon l'une quelconque des revendications précédentes, dans lequel le dispositif de conversion de puissance comprend un ensemble de filtrage comprenant un filtre de sortie associé à chaque phase de l'ensemble d'au moins une phase alternative, chaque capteur de l'ensemble d'au moins un capteur étant destiné à mesurer une grandeur représentative du courant instantané entre des interrupteurs de puissance du convertisseur de puissance et un filtre de sortie de l'ensemble de filtrage.

## Patentansprüche

1. Leistungsumrichtvorrichtung (D), umfassend einen Leistungsumrichter (CONV), der Leistungsschalter umfasst und dazu bestimmt ist, einen Satz von mindestens einer Wechselstromphase abzugeben, eine Steuervorrichtung (CC), die dazu bestimmt ist, Befehle zu erzeugen, die dazu bestimmt sind, die Leistungsschalter zwischen einem Sperrzustand und einem leitenden Zustand umzuschalten, und eine Schutzvorrichtung, die Folgendes umfasst:
- einen Satz von mindestens einem Sensor (C1, C2, C3), wobei jeder Sensor des Satzes von mindestens einem Sensor das Abgeben eines Messwerts (m1, m2, m3) ermöglicht, der den momentanen Strom darstellt, der am Ausgang des Leistungsumrichters (CONV) an einer Phase des Satzes von mindestens einer Phase abgegeben wird,
- eine Schutzvorrichtung (CP), die mit der Steuervorrichtung (CC) und dem Leistungsumrichter (CONV) verbunden ist, sodass die von der Steuervorrichtung (CC) erzeugten Befehle über die Schutzvorrichtung (CP) an den Leistungsumrichter (DC) übertragen werden, wobei die Schutzvorrichtung den Messwert empfängt, der den momentanen Strom darstellt, der von dem Satz von mindestens einem Sensor abgegeben wird, wobei die Schutzvorrichtung (CP) so konfiguriert ist, dass sie die von der Steuervorrichtung (CC) abgegebenen Befehle unterdrückt, wenn der Absolutwert des Messwerts, der den momentanen Strom darstellt, der von mindestens einem Sensor von dem Satz von mindestens einem Sensor abgegeben wird, einen ersten vorbestimmten Schwellenwert (S1) überschreitet, sodass die Leistungsschalter des Leistungsumrichters (CONV) im Sperrzustand gehalten werden,
**dadurch gekennzeichnet, dass** die Leistungsumrichtvorrichtung einen Regler umfasst, der so konfiguriert ist, dass er ein Tastverhältnis für eine vorbestimmte Zerhackfrequenz und einen vorbestimmten Zielstrom bestimmt, wobei die Steuervorrichtung dazu konfiguriert ist, die Befehle zum Schalten der Leistungsschalter an der Zerhackfrequenz mit dem Tastverhältnis zu erzeugen, wobei der Regler den von jedem Sensor des Satzes von mindestens einem Sensor gelieferten Messwert empfängt und ferner zu Folgendem konfiguriert ist:
- Bestimmen des Tastverhältnisses anhand eines Wertes des Zielstroms bei einem vorbestimmten Referenzstrom, wenn der Absolutwert des Messwerts, der den momentanen Ausgangsstrom darstellt, der von jedem Sensor des Satzes von mindestens einem Sensor abgegeben wird, kleiner als ein oder gleich einem dritten Schwellenwert ist, der niedriger als der erste Schwellenwert und der zweite Schwellenwert ist, und Bestimmen des Tastverhältnisses anhand eines Wertes des Zielstroms, der gleich einem Schutzstrom ist, der kleiner als der Referenzstrom ist, wenn der Absolutwert des Messwerts, der den momentanen Ausgangsstrom darstellt, der von mindestens einem Sensor des Satzes von mindestens einem Sensor abgegeben wird, größer als der dritte Schwellenwert ist,
- und/oder Festlegen des Wertes der Zerhackfrequenz auf eine vorbestimmte Referenz-Zerhackfrequenz, wenn der Absolutwert des Messwerts, der den momentanen Ausgangsstrom darstellt, der von jedem Sensor des Satzes von mindestens einem Sensor abgegeben wird, kleiner als ein oder gleich einem dritten Schwellenwert ist, der niedriger als der erste Schwellenwert und der zweite Schwellenwert ist, und Festlegen der Zerhackfrequenz auf eine Schutz-Zerhackfrequenz, wenn der Absolutwert des Messwerts, der den momentanen Ausgangsstrom darstellt, der von mindestens einem Sensor des Satzes von mindestens einem Sensor abgegeben wird, größer als der dritte Schwellenwert ist.

2. Leistungsumrichtvorrichtung nach dem vorhergehenden Anspruch, wobei die Schutzvorrichtung (CP) Folgendes umfasst:
- einen Satz von mindestens einem Komparator (CO1, CO2, CO3), wobei jeder Komparator so konfiguriert ist, dass er den Absolutwert des Messwerts, der den momentanen Strom darstellt, der von jedem Sensor (C1, C2, C3) des Satzes von mindestens einem Sensor abgegeben wird, mit einem ersten Schwellenwert (S1) vergleicht,
- einen Inhibitor (IN), der mit dem Ausgang jedes Komparators (CO1, CO2, CO3) des Satzes von mindestens einem Komparator verbunden ist und dazu bestimmt ist, mit der Steuervorrichtung (CC) und dem Leistungsumrichter (CONV) verbunden zu werden, sodass die von der Steuervorrichtung (CC) abgegebenen Befehle über den Inhibitor (IN) an den Leistungsumrichter (CONV) übertragen werden, wobei der Inhibitor (IN) so konfiguriert ist, dass er die von der Steuervorrichtung abgegebenen Befehle unterdrückt, wenn der Absolutwert des Messwerts, der den momentanen Strom darstellt, der von mindestens einem Sensor des Satzes von mindestens einem Sensor abgegeben wird, größer als der erste Schwellenwert (S1) ist.

3. Leistungsumrichter nach einem der vorhergehenden Ansprüche, wobei die Schutzvorrichtung (CP) so konfiguriert ist, dass sie die von der Steuervorrichtung erzeugten Befehle so lange unterdrückt, wie der Absolutwert des Messwertes, der einen der momentanen Ströme darstellt, größer als ein zweiter Schwellenwert (S2) ist, der kleiner als der erste Schwellenwert (S1) ist.

4. Leistungsumrichtvorrichtung nach einem der vorhergehenden Ansprüche, wobei der Satz von mindestens einem Sensor einen Hall-Sensor umfasst.

5. Leistungsumrichtvorrichtung nach einem der vorhergehenden Ansprüche, wobei die Leistungsumrichtvorrichtung einen Filtersatz umfasst, der einen Ausgangsfilter umfasst, der jeder Phase des Satzes von mindestens einer Wechselstromphase zugeordnet ist, wobei jeder Sensor des Satzes von mindestens einem Sensor dazu bestimmt ist, eine Größe zu messen, die den momentanen Strom zwischen Leistungsschaltern des Leistungsumrichters und einem Ausgangsfilter des Filtersatzes darstellt.

## Claims

1. A power conversion device (D) comprising a power converter (CONV) comprising power switches and intended to deliver a set of at least one AC phase, a control device (CC) intended to generate commands intended to switch the power switches between an off-state and an on-state, and a protective device comprising:
- a set of at least one sensor (C1, C2, C3), each sensor in the set of at least one sensor making it possible to deliver a measurement (m1, m2, m3) representative of the instantaneous current delivered at the output of the power converter (CONV) on a phase of the set of at least one phase,
- a protective device (CP) connected to the control device (CC) and to the power converter (CONV) such that the commands generated by the control device (CC) are transmitted to the power converter (DC) via the protective device (CP), the protective device receiving the measurement representative of the instantaneous current delivered by the set of at least one sensor, the protective device (CP) being configured to inhibit the commands delivered by the control device (CC) when the absolute value of the measurement representative of the instantaneous current and delivered by at least one sensor of the set of at least one sensor exceeds a predetermined first threshold (S1) such that the power switches of the power converter (CONV) are kept in the off-state,
**characterised in that** the power conversion device comprising a regulator configured to determine a duty cycle for a predetermined chopping frequency and a predetermined target current, the control device being configured to generate the commands intended to switch the power switches at the chopping frequency with the duty cycle, the regulator receiving the measurement delivered by each sensor of the set of at least one sensor and being further configured to:
- determine the duty cycle from a value of the target current at a predetermined reference current, when the absolute value of the measurement representative of the instantaneous output current and delivered by each sensor of the set of at least one sensor is less than or equal to a third threshold which is less than the first threshold and the second threshold, and to determine the duty cycle from a value of the target current which is equal to a protective current which is less than the reference current, when the absolute value of the measurement representative of the instantaneous output current and delivered by at least one sensor of the set of at least one sensor is greater than the third threshold,
- and/or set the value of the chopping frequency at a predetermined reference chopping frequency, when the absolute value of the measurement representative of the instantaneous output current and delivered by each sensor of the set of at least one sensor is less than or equal to a third threshold which is less than the first threshold and the second threshold, and set the chopping frequency at a protective chopping frequency, when the absolute value of the measurement representative of the instantaneous output current and delivered by at least one sensor of the set of at least one sensor is greater than the third threshold.

2. The power conversion device according to the preceding claim, wherein the protective device (CP) comprises:
- a set of at least one comparator (CO1, CO2, CO3), each comparator being configured to compare the absolute value of the measurement representative of the instantaneous current and delivered by each sensor (C1, C2, C3) of the set of at least one sensor to a first threshold (S1),
- an inhibitor (IN) connected to the output of each comparator (CO1, CO2, CO3) of the set of at least one comparator and being intended to be connected to the control device (CC) and to the power converter (CONV) such that the commands delivered by the control device (CC) are transmitted to the power converter (CONV) via the inhibitor (IN), the inhibitor (IN) being configured to inhibit the commands delivered by the control device when the absolute value of the measurement representative of the instantaneous current and delivered by at least one sensor of the set of at least one sensor is greater than the first threshold (S1).

3. The power conversion device according to any one of the preceding claims, wherein the protective device (CP) is configured to inhibit the commands generated by the control device as long as the absolute value of the measurement representative of one of the instantaneous currents is greater than a second threshold (S2) which is less than the first threshold (S1).

4. The power conversion device according to any one of the preceding claims, wherein the set of at least one sensor comprises a Hall effect sensor.

5. The power conversion device according to any one of the preceding claims, wherein the power conversion device comprises a filtering assembly comprising an output filter associated with each phase of the set of at least one AC phase, each sensor of the set of at least one sensor being intended to measure a quantity representative of the instantaneous current between power switches of the power converter and an output filter of the filtering assembly.
